# EUROPEAN PATENT SPECIFICATION

(11) **EP 0 361 205 B1**
(45) Date of publication and mention of the grant of the patent: **10.05.1995**
(21) Application number: 89116877.5
(22) Date of filing: 12.09.1989
(51) Int. Cl.: C08L 23/12, C08L 23/16

(54) **Plastoelastomeric polyolefin compositions and process for preparing them**
Thermoplastische elastomere Polyolefin-Zusammensetzungen und Verfahren zu deren Herstellung
Compositions thermoplastiques élastomères de polyoléfine et procédé pour leur préparation

(30) Priority: 13.09.1988 IT 2190688
(43) Date of publication of application: 04.04.1990
(73) Proprietor: HIMONT ITALIA S.r.l., I-20121 Milano (IT)
(72) Inventor: Braga, Vittorio, I-44100 Ferrara (IT); Manica, Michele, I-44100 Ferrara (IT); Martini, Emilio, I-4044 Pontecchio Marconi Bologna (IT); Milani, Federico, Dr., I-45030 S. Maria Maddalena Rovigo (IT)
(74) Representative: Weinhold, Peter, Dr.

(56) References cited:
- EP-A- 0 072 203
- EP-A- 0 164 217
- EP-A- 0 256 724

## Description

The present invention relates to plastoelastomeric polyolefin compositions, comprising blends of at least partially vulcanized EP or EPDM rubber and at least one plastomeric thermoplastic olefin polymer, obtainable by dynamic vulcanization of the corresponding blends containing said rubber in the non-vulcanized state.

The preparation of compositions based on thermoplastic polymers and vulcanized rubbers by means of dynamic vulcanization is known in the art and is described, e.g., in US-A-3,578,643; 3,862,106; 3,037,954 and 3,806,558.

According to said method, the vulcanization of the elastomeric component is caused to occur during the step of mixing or mastication with a plastomeric polymer in the molten state, by means of crosslinking agents, usually of the conventional type, such as,e.g.,peroxides, azide compounds, mixtures of sulphur and zinc oxide, substituted ureas, thiocarbamates etc. If there is a sufficient amount of plastomeric polymer in the thus treated mixture, the composition, upon completion of the vulcanization of the elastomeric component, retains good processability in hot condition, even if it contains high proportions of vulcanized elastomer.

According to FR-A-2,408,632, plastoelastomeric polyolefin compositions may be obtained by means of dynamic vulcanization methods which utilize, as crosslinking agent, a halogenated phenolic resin or a phenolic resin which is not halogenated but is associated with halogen donors in combination with a metal oxide (activator).

According to said patent, the blend of EPDM rubber and olefinic polymer, wherein the phenolic resin content ranges from 5 to 20% with respect to the rubber, is subjected to mastication at a temperature sufficient to melt the olefinic polymer, then the activator is added and mastication is continued at a temperature at which crosslinking of the elastomeric component occurs. In this case the metal oxide, in particular zinc oxide, favours the complete crosslinking of the elastomer, which is one of the objects of the process of said patent.

Generally, the products obtained according to the above processes exhibit good elastomeric characteristics at room temperature. However, these characteristics, in particular the compression set values, deteriorate as the temperature rises, thereby jeopardizing the applicability of said products above the melting point of the plastomer.

From US-A-3,957,919 it is further known to prepare thermoplastic elastomers by subjecting a blend of an EPDM interpolymer with polypropylene and substantial amounts of polyethylene to a crosslinking reaction by means of free radical generating agents, while subjecting said blend to hot working.

According to said preparation, polyethylene is preferentially crosslinked and grafted onto the EPDM interpolymer, thereby protecting polypropylene from radical attack, degradation and crosslinking or grafting reactions. The products thus obtained possess improved molding characteristics but show excessively low elastic properties such as elongation at break, tension set and compression set, especially at high temperatures.

From EP-A-0 256 724 it is known to prepare thermoplastic elastomer compositions by partially crosslinking a composition comprising the following components (A), (B) and (C):
(A)30-70 parts by weight of an ethylene/α-olefin copolymer prepared by copolymerizing ethylene and an α-olefin having 3 to 12 carbon atoms in the presence of a catalyst comprising a solid component and an organoaluminum compound which solid component contains at least magnesium and titanium, said ethylene/α-olefin copolymer having the following properties (I) to (IV):
   (I) Melt index 0.01-100 g/10 min
   (II) Density 0.860-0.910 g/cm³
   (III) Maximum peak temperature as measured according to a differential scanning calorimetry (DSC) not lower than 100°C
   (IV) Insolubles in boiling
   n-hexane not less than 10 wt.%
(B) 70-30 parts by-weight of a propylene polymer; and
(C) 70-200 parts by weight, based on 100 parts by weight of the components (A) and (B), of an ethylene/α-olefin copolymer rubber.

It has now, surprisingly, been found that plastoelastomeric polyolefin compositions which, besides exhibiting an excellent processability in hot condition and in general having characteristics comparable to the ones of the best plastoelastomeric compositions of the prior art, additionally show better elastic characteristics at high temperatures, can be prepared under certain conditions. Compositions showing the above properties and representing one of the objects of the present invention, comprise an intimate mixture of the following components, in the indicated percentages by weight, based on the composition:
A) 10 to 50%, preferably 20 to 30%, of not crosslinked polypropylene;
B) 2 to 10%, preferably 5 to 10%, of an elastomeric, not cross linked ethylene/propylene copolymer and/or of an elastomeric, not crosslinked ethylene/propylene/diene terpolymer;
C) 30 to 45%, preferably 35 to 40%, of a polymeric product which is substantially insoluble in xylene at a temperature of 135°C and comprises polypropylene and ethylene/propylene copolymer and/or ethylene/propylene/diene terpolymer;
D) 5 to 58%, preferably 10 to 50%, of extender oil.

Optionally, crosslinked or not crosslinked polyethylene can be present in said compositions in amounts lower than 4% by weight based on the weight of the polymer compositions.

The above-specified compositions may optionally also contain inorganic and/or organic non-polymeric products such as ZnO, SiO₂, TiO₂, kaolin, carbon black, stabilizers, anti-ageing agents, catalysts, accelerators, crosslinking coadjuvants or decomposition products thereof.

The above polypropylene (A) preferably is a proplyene homopolymer or a copolymer of propylene having up to 10% by weight of copolymerized ethylene.

The above copolymers and terpolymers (B) preferably contain from 25 to 60% by weight, particularly from 30 to 45% by weight, of propylene, and from 0 to 5% by weight of units derived from one or more conjugated or non-conjugated monomeric dienes, such as, for example, indene, 1,3-butadiene, 1,4-hexadiene, norbornadiene, ethylidene norbornene and cyclopentadiene.

They are preparable by copolymerization of the corresponding monomers in the presence of Ziegler catalysts, according to methods well known in the art. Examples of Ziegler catalysts are the catalysts prepared by contacting a compound of a metal belonging to group IVa, Va, VIa or VIIa of the periodic system of elements, such as, e.g., a Ti, V or Cr halide, with organometallic compounds of a metal of group I, II or III of the periodic system containing at least one metal-carbon bond, e.g. alkyls such as Al alkyls and Al alkyl halides.

If the molecular weight of the elastomeric copolymer or terpolymer exhibits a rather high value, corresponding values of η higher than 3.5 dl/g, of particular advantage for the compositions of the invention are copolymers and terpolymers the macromolecular structure of which is substantially free of head-to-head, tail-to-tail inversions of the propylenic unit.

In this connection it is known that propylene can enter the polymeric chain according to primary or secondary insertions, as described, for example, by I. Pasquon and U. Giannini in "Catalysis Science & Technology" vol. 6, pages 65-159, J.R. Anderson & N. Doudart, Springer Verlag, Berlin, 1984.

"Propylene enchainment inversion" means the insertion variation (from primary to secondary) that the propylene molecule may exhibit in the macromolecule.

Methods for determining the distribution of the ethylene-propylene sequences, and in particular the absence of the above inversion in the ethylene-propylene copolymers, are well known in literature. Said methods include well defined procedures for qualitative and quantitative analyses, based on ¹³C-NMR, according to what is described, for example, by J.C. Randall in "Polymer Sequence Determination by C 13-NMR Method" (Academic Press, N.Y. 1977) and in "Macromolecules", 11, 33,(1978), or by H.N. Cheng in "Macromolecules", 17, 1950 (1984) and by C.J. Charman et al in "Macromolecules", 10, 536 (1977). Such procedures may also be applied in the case of ethylene/propylene/diene terpolymers in which the diene is present in relatively small amounts, generally lower than 10% by weight.

Ethylene-propylene copolymers and ethylene-propylene-(conjugated or non-conjugated) diene terpolymers the macromolecules of which are substantially free of propylene enchainment inversions, are characterized by very low absorption values in the ¹³C-NMR spectrum (obtained in ortho-dichlorobenzene solution at a temperature of 120°C, using dimethyl sulphoxide (DMSO) as standard), i.e. values of about 34.9, 35.7 and 27.9 ppm (chemical shift, based on tetramethylsilane (TMS) = 0), which values are typical for the presence of sequences of the type: 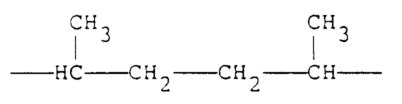
(head-to-head inversion or tail-to-tail inversion of type X₂) and of the type: 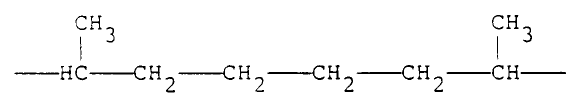
(head-to-head inversion or tail-to-tail inversion of type X₄).

The substantial absence of propylene enchainment inversions in such copolymers and terpolymers may be inferred from the fact that at least one,and preferably both, of the two parameters X₂ and X₄ exhibit a value equal to or lower than 0.02.

As is known, the paramters X₂ and X₄ represent the fraction of methylene sequences having 2 and 4, respectively uninterrupted methylene groups between two consecutive methyl or methine groups in the polymer chain, with respect to the total of uninterrupted methylene sequences determined by ¹³C-NMR. The value of said fraction can be calculated according to the method described by J.C. Randall in "Macromolecules" 11, 33 (1978).

Copolymers and terpolymers endowed with such characteristics are known. They may be prepared by polymerization of the corresponding monomer mixtures in the presence of Ziegler catalysts based on titanium compounds (optionally supported on magnesium halide) and on aluminium organometal compounds. Catalysts of this kind are described, for example, in US-A-4,013,823, EP-A-202,550, Italian patent No. 1,173,40 and in Italian patent applications Nos. 20,203 A/81, 20,386 A/85, 21,872 A/86, 21,510 A/87 in the name of the applicant hereof.

The polymeric product which is insoluble in xylene at 135°C and constitutes component (C) of the compositions according to the present invention, substantially comprises the products derived from the crosslinking of components (A) and (B), and possibly the grafting products of components (A) and (B), either crosslinked or not crosslinked, component (A) being grafted onto component (B) and vice versa.

Generally, the polypropylene content in said component (C) ranges from 5 to 20% and preferably from 10 to 15% by weight, based on the weight of the whole composition.

Component (D) is an oil of the type which usually is employed for extending rubbers in general, and can be, e.g., an aromatic, naphthenic or, preferably, paraffinic oil.

Generally, in the plastoelastomeric compositions of the present invention the elastomeric phase appears to be dispersed in the continuous plastomeric phase in the form of particles of a size not greater than 10 »m, at least 50% thereof having sizes lower than 5 »m.

The plastoelastomeric compositions of the present invention are obtainable by subjecting to mastication or to other shearing stresses, in the presence of a peroxide crosslinking agent and of particular crosslinking coadjuvants, as defined hereinafter, a polymeric mixture comprising from 20 to 80% by weight, preferably from 60 to 25% by weight, of polypropylene and from 80 to 20% by weight, preferably from 40 to 75% by weight of an elastomeric ethylene-propylene copolymer and/or of an elastomeric ethylene-propylene-diene terpolymer, at a temperature sufficient to melt the polypropylene and at which the cross-linking of about 50 to 85% by weight of the starting elastomer occurs.

Optionally, amounts of polyethylene lower than 4% by weight based on the weight of the polymeric mixture can be present therein.

Whenever used herein with respect to the starting elastomer, the term "crosslinking" comprises both the actual crosslinking or vulcanization reaction of the elastomer and reactions which result in the grafting of the crosslinked or not crosslinked elastomer onto the polypropylene (or plastomeric phase) as a consequence of the reaction promoted by the crosslinking system utilized.

As crosslinking agents, organic peroxides are used, preferably those which exhibit a half-life of the order of 10 to 200 seconds at a temperature ranging from 100° to 240°C, at which temperature the vulcanization reaction is caused to occur.

Examples of suitable peroxides are dicumyl peroxide, α,α′-bis(tert.-butylperoxy)-m- and/or p-diisopropylbenzene and 1,1-di-tert.-butylperoxy-3,5,5-trimethylcyclohexane.

The amount of peroxide utilized in the vulcanization generally will range from about 0.1 to about 10% by weight, preferably from about 0.2 to about 5% by weight, based on the elastomeric component.

Apart from the above peroxides the vulcanization system to be utilized in the preparation of the compositions according to the present invention also includes coadjuvants selected from furfurylidene acetone, the (preferably C₆₋₈-aryl or C₁₋₄-alkyl)esters of furfurylidene malonic acid, the condensation products of β-(alpha-furyl)-acrolein with cyclic ketones and furan derivatives represented by one of the following general formulae: 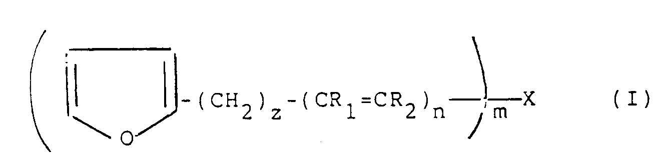
wherein R₁ and R₂, the same or different from each other, represent H or a C₁₋₃-alkyl group (e.g. methyl and ethyl), X is a radical selected from -CHO, -COOH, -CONH₂, -CN, -NO₂, -COOCO-, -COOR, 〉CO, -CH₂COCH₂COOR, -CH(COOR)₂, where R is a C₆₋₈-aryl group (e.g. phenyl group), or a C₁₋₄ alkyl group (e.g. methyl, ethyl, propyl, butyl),
z = 0 or 1,
n = 1 or 2,
m = a number equal to the free valence of X; 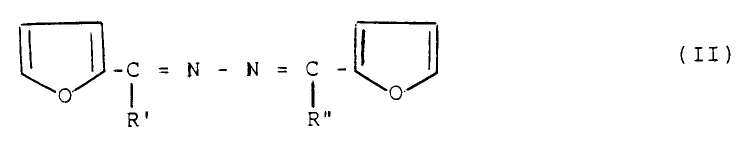
wherein R' and R'', the same or different from each other, may be hydrogen, C₁₋₄-alkyl radicals (e.g. methyl, ethyl, propyl, butyl) or C₅₋₈-, preferably C₆₋₈-cycloalkyl radicals (e.g. cyclohexyl, cyclooctyl, cyclopentyl).

Said coadjuvants usually are employed in amounts corresponding to 5 to 60% by weight, preferably 10 to 30% by weight, of the utilized peroxide.

Examples of furan derivatives according to formulae (I) and (II) suitable for the purposes of the present invention are 1,5-difurfuryl-1,4-pentadiene-3-one and difurfural-aldazine (see formula (II), $\text{R' = R'' = H}$ ).

Further examples are: β-(alpha-furyl)-acrolein; 5-(alpha-furyl)-pentadienal; β-(alpha-furyl)-acrylamide; β-(alpha-furyl)-acrylonitrile; β-(alpha-furyl)-acrylic acid and esters thereof; bis-furfurylidene acetone; and alpha-ethyl-β-(alpha-furyl)-acrolein.

The above compounds are known in the art.

They are preparable, for example, according to the methods described in US-A-3,301, 837.

The products obtained from the condensation of β-(alpha-furyl)-acrolein with cyclic ketones may e.g. be prepared according to the process described in "Berichte", 76, 676 (1943).

Thus, another object of the present invention is a process for preparing plastoelastomeric polyolefin compositions, which comprises the following consecutive steps:
1) preparing an intimate mixture, comprising, in % by weight:
   (a) from 20 to 80%, preferably from 60 to 25%, of polypropylene and/or a copolymer of propylene with up to 10% by weight of ethylene;
   (b) from 80 to 20%, preferably from 75 to 40%, of an elastomeric ethylene-propylene copolymer and/or elastomeric ethylene-propylene-diene terpolymer;
   (c) from 0.1 to 10%, based on said elastomeric copolymer or terpolymer, of an organic peroxide as vulcanizing agent;
   (d) from 5 to 60%, based on said organic peroxide, of at least one compound represented,e.g.,by the preceding formulae (I) and (II) as vulcanization coadjuvants;
   (e) optionally, an amount lower than 4%, based on the total polymeric products, of polyethylene;
2) heating the mixture during the mixing or mastication step or during the step in which said mixture is subjected to other shearing stresses, to a temperature of from 160°C to 240°C, to melt the polypropylene and crosslink about 50 to 85% by weight of the originally present elastomeric copolymer and/or terpolymer;
3) adding to the resulting product, by means of intimate mixing (preferably paraffin) extender oil in an amount ranging from 6 to 100 parts by weight, preferably from 20 to 80 parts by weight, per 100 parts of said product.

The elastomeric materials specified under (b) preferably contain from about 25 to about 60%, particularly from about 30 to about 45% by weight of copolymerized propylene and from 0 to about 5% by weight of units derived from one or more conjugated or non-conjugated dienic monomers as mentioned hereinbefore. They preferably have a molecular weight corresponding to values of η ranging from about 2 to about 8 dl/g, particularly from 3 to 5 dl/g, extremes included.

If the molecular weight of the elastomeric component corresponds to values of η higher than 3.5 dl/g, said component preferably is selected from ethylene/propylene/(diene) copolymers and terpolymers in the structure of which head-to-head, tail-to-tail inversions of the propylenic unit, as explained hereinafter, are substantially absent. More advantageously, said copolymers and terpolymers are selected from polymers which exhibit values of the product (R₁ x R₂) of higher than 2 and a broad molecular weight distribution corresponding to Mw/Mn values of at least 6, and preferably ranging from about 10 to about 15. As is known, (R₁ x R₂) represents the product of the reactivity ratios of ethylene (R₁) and propylene (R₂), said product being calculated from the sequence distribution in such copolymers and terpolymers through ¹³C-NMR analysis, according to known methods.

In order to practice the process of the present invention it is also possible to use, instead of the individual components (a) and (b) of the above mixture, an intimate mixture of polypropylene and of elastomeric ethylene-propylene copolymer and/or elastomeric ethylene-propylene-diene terpolymers as it is obtainable in a single polymerization step by polymerizing the monomers, for example, according to the process of US-A-4,399,054, i.e. by first polymerizing propylene up to the desired extent and subsequently polymerizing a mixture of ethylene and propylene, optionally containing the dienic monomer, in the desired ratio.

To the mixture thus obtained the vulcanization components as defined under (c) and (d) may subsequently be added.

Other vulcanization co-agents or coadjuvants (for example liquid polybutadiene, triallyl cyanurate) as well as additives, such as thermal stabilizers, antioxidants, mineral fillers, dyes, may optionally be added to the above mixture of components (a) to (d).

Within the range of the operative conditions illustrated hereinbefore it is possible to obtain, after crosslinking, products having higher or lower quantitative ratios of components (A), (B) and (C) as defined above by varying, according to techniques known to those skilled in the art, the amounts of the reagents and of the components of the polymeric mixture. For instance, the use of higher amounts of coadjuvant allows to obtain higher amounts of crosslinked polypropylene. In particular, it is possible to add varying amounts of polypropylene (A) to the vulcanized compositions resulting from process step (2), for example in order to adjust the product hardness.

Generally, the amount of polypropylene in the product which is insoluble in xylene at 135°C accounts for 20 to 70%, preferably for 30 to 50% by weight of the polypropylene contained in the starting mixture subjected to crosslinking.

The elastomeric copolymer and/or terpolymer in said insoluble product usually amounts to 50 to 85%, preferably 70 to 85% by weight of the copolymer and/or terpolymer contained in said starting mixture.

The following examples are given to better illustrate the present invention, without being however a limitation thereof.

### EXAMPLE 1

In a Banbury internal mixer there were intimately mixed for 5 minutes, at a temperature gradually rising from 80° to 180°C, 26 parts by weight (p.w.) of propylene homopolymer having a M.I. (230°C, 2.16 kg) of 1 and an isotacticity index I.I. equal to 92%, and 74 parts by weight (p.w.) of an ethylene/propylene copolymer, containing 38% by weight of copolymerized propylene and having been obtained by bulk polymerization of the monomers at 40°C, using a titanium catalyst similar to the one described in example 1 of EP-A-262,987 and Al-triisobutyl as co-catalyst. Said copolymer exhibited the following characteristics:
- head-to-head, tail-to-tail inversions of the propylene unit: substantially absent ( $\text{X₂ = X₄ = 0.018%}$ );
- $\text{R₁ x R₂ = 8}$ ;
- $\text{Mw/Mn = 11}$ ;
- η = 3.8 dl/g.

The resulting mixture was discharged and granulated by using a Bandera single-screw extruder.

The granules were then placed in a laboratory two-screw extruder (produced by A.P.V.) having a length/diameter (L/D) ratio of 25 and a diameter of 127 mm and equipped with conveying and masticating elements by means of which a residence time of 60 seconds was obtained, which extruder operated at a temperature ranging from 160° to 240°C. 2% by weight of Peroximon® F40 and 0.37% by weight of di-furfural-aldazine, based on the polypropylene/elastomer mixture, were simultaneously introduced into said extruder.

At about 2/3 of the extruder length the elastomer crosslinking reaction was stopped. At said extruder point, 20 p.w. of polypropylene of the same type as the starting polypropylene, 3 p.w. of ZnO, 0.5 p.w. of mercaptobenzimidazole and 0.2 p.w. of polymerized 2,2,4-triethyl-1,2-dihydroquinone and thereafter 74 p.w. of paraffin extender oil, preheated to 200°C, were added. The resulting blend was then discharged from said extruder into a second single-screw extruder ( $\text{L/D = 8}$ , D = 20 mm), where it was compacted, degassed and further homogenized, whereafter it was passed to a liquid-ring top cutting unit for transformation into pellets.

The obtained product was subjected, in the order given below, to the following analysis procedures.
1) Extraction with xylene at 135°C for 5 hours and separation of the residue by filtration from the resulting solution, using a Gooch heated-wall filter.
2) Determination of the polypropylene amount present in said residue by means of infrared analysis and, by difference, of the amount of crosslinked copolymer or terpolymer.
3) Determination, in the solution obtained from the above-mentioned extraction, of the content of polypropylene as such (not crosslinked and not grafted onto the elastomeric component) by cooling said solution which resulted in the precipitation of polypropylene which was filtered at 23°C and washed with xylene at 23°C.
4) Determination of the content of not crosslinked elastomeric copolymer and terpolymer, carried out by coagulation with acetone of the xylene solution derived from the separation of polypropylene as such, according to procedure 3), and by separating the coagulated product.
5) Determination of the paraffin oil content carried out by evaporating under vacuum the acetone/xylene mixture obtained from procedure 4).

The above analyses afforded the following results, expressed in % by weight on the thermoplastic composition:

| | |
|---|---|
| - not crosslinked elastomeric copolymer | 7% |
| - polypropylene as such | 15% |
| - residue insoluble in xylene at 135°C | 38% |
| - polypropylene contained in the insoluble residue (based on the total of the composition) | 8% |
| - extender oil | 37%. |

The characteristics of the obtained product, determined on specimens obtained from an injection molding press, were as follows:

| | | |
|---|---|---|
| SHORE hardness A | 70 | (ISO 868) |
| Tensile strength (kg/cm²) | 75 | (ISO 37) |
| Elongation at break (%) | 350 | (ISO 37) |
| Compression set (10 h at 170°C) (%) | 55 | (ISO 815). |

In the obtained composition the elastomeric phase was highly dispersed,with particle sizes lower than 10 »m, at least 50% of said particles having a size lower than 5 »m.

### EXAMPLE 2

The procedure of example 1 was followed, using polypropylene and ethylene/propylene copolymer in the form of a product directly obtained by a polymerization carried out according to the following method. A 20 l autoclave, suitably equipped and containing 13 l of n-pentane, was charged, at a temperature of 20°C, with 0.26 g of a catalyst based on MgCl₂ and TiCl₄, having spheroidal shape and prepared according to example 1 of US-A-4,399,054, along with 21.6 g of Al (isobutyl)₃.

The autoclave was brought to a temperature of 60°C and propylene, withdrawn from a cylinder thermoregulated at 40°C, was introduced under stirring up to a pressure of 3.5 atm. While maintaining constant both temperature and pressure, propylene was introduced until about 1300 g of polypropylene had formed. Degassing was then carried out in order to remove the solvent and the unreacted propylene, bringing the temperature in the autoclave again to 20°C. While maintaining the polymeric mass under stirring and operating at a temperature of 20°C, the autoclave was charged with a 50/50 by weight mixture of ethylene/propylene withdrawn from cylinders thermoregulated at 40°C, until a pressure of 9.5 atm was reached. Monitoring the cylinder weight loss, about 3,730 g of ethylene/propylene copolymer in the gaseous phase were thus produced within 4.5 hours. After gradual degassing in order to remove the unreacted monomers, the autoclave was opened and 5,030 g of spheroidal polymer were discharged therefrom. The obtained polymer had a propylene content of 54% and η was 3.7 dl/g. The copolymeric component of said blend was an ethylene/propylene copolymer containing 38% by weight of copolymerized propylene which showed the following characteristics:
- head-to-head, tail-to-tail enchainment of propylene = substantially absent ( $\text{X₂ = X₄ = 0.019}$ ),
- $\text{R₁ x R₂ = 8.5}$ ,
- $\text{Mw/Mn = 12}$ ,
   η = 3.8 dl/g.

Said synthesis product was converted to pellets by means of a head-cut single-screw extruder in order to facilitate the product feeding to the APV extruder of the preceding example. The test was conducted as described in example 1 as regards both the arrangement in the APV extruder and the addition of crosslinking agents, co-agents, polypropylene and extender oil.

The analyses of the resulting product gave the following results:

| | |
|---|---|
| - elastomeric not crosslinked copolymer | 6% |
| - polypropylene as such | 16% |
| - residue insoluble in xylene at 135°C | 37% |
| - polypropylene content in the insoluble residue | 9% (on the total) |
| - extender oil | 38%. |

The product characteristics determined on test pieces obtained from an injection press, according to the ISO standards indicated hereinabove, were as follows:

| | |
|---|---|
| SHORE hardness A | 69 |
| Tensile strength (MPa) | 7.4 |
| Elongation at break (%) | 360 |
| Compression set (10 h at 170°C) (%) | 57. |

The particle size of the dispersed elastomeric phase was lower than 10 »m, with at least 50% of the particles having a size lower than 5 »m.

### EXAMPLE 3

The procedure of example 1 was followed with the same amounts of reagents, but using an ethylene/propylene copolymer containing 38% by weight of propylene, prepared by means of a homogeneous catalyst system based on VOCl₃ and Al₂(C₂H₅)₃Cl₃, as described in example 1 of Italian patent No. 866, 519. Said copolymer exhibited the following characteristics:
- $\text{R₁ x R₂ = 0.5}$ ; $\text{Mw/Mn = 3}$ ;
- head-to-head, tail-to-tail inversions of the propylene unit represented by values of $\text{X₂ = X₄ = 0.05}$ 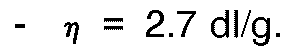 ;
- η = 2.7 dl/g.

The analyses of the obtained Product gave the following results, expressed as % by weight:

| | |
|---|---|
| - elastomeric not crosslinked copolymer | 4% |
| - polypropylene as such | 20% |
| - residue insoluble in xylene at 135°C | 36% |
| - polypropylene contained in the insoluble residue | 5% (on the total) |
| - extender oil | 37%. |

The characteristics of the product, determined on test pieces obtained from an injection press according to the ISO standards indicated hereinabove, were as follows:

| | |
|---|---|
| SHORE hardness A | 69 |
| Tensile strength (MPa) | 8.0 |
| Elongation at break (%) | 400 |
| Compression set (10 h at 170°C) (%) | 70. |

The size of the dispersed elastomeric particles was lower than 10 »m.

### EXAMPLE 4 (comparative)

Example 1 was repeated, with the exception that a paraffin extender oil was incorporated into the ethylene/propylene copolymer upon mixing with polypropylene. The obtained product exhibited the following characteristics:

| | |
|---|---|
| - elastomeric not cross linked copolymer | 22% |
| - polypropylene as such | 19% |
| - residue insoluble in xylene at 135°C after a 5-hour extraction | 16% |
| - polypropylene contained in the insoluble residue | 4% (on the total) |
| - extender oil | 40%. |

The characteristics of the obtained product, determined on test pieces obtained from an injection press according to the above-indicated ISO standards were as follows:

| | |
|---|---|
| SHORE hardness A | 67 |
| Tensile strength (MPa) | 3.5 |
| Elongation at break (%) | 250 |
| Compression set (10 h at 170°C) (%) | 72. |

The size of the elastomeric dispersed particles was lower than 10 »m, with more than 50% of the particles having sizes lower than 5 »m.

### EXAMPLE 5

Example 1 was repeated, using an ethylene/propylene copolymer containing 47% by weight of copolymerized propylene, obtained by employing a titanium catalyst similar to the one of example 7 of EP-A-262,987 and Al-triisobutyl as co-catalyst. Said copolymer had the following characteristics:
- head-to-head inversions, tail-to-tail inversions of the propylene unit represented by values of X₂ = 0.02; X₄ = 0.05;
- $\text{R₁ x R₂ = 9}$ ;
- $\text{Mw/Mn = 11}$ ;
- η = 3.5 dl/g.

A crosslinking coadjuvant, 1,5-difurfuryl-1,4-pentadiene-3-one in an amount equal to 0.3% by weight, based on the blend of the two polymers, was employed.

The analyses of the obtained product yielded the following results, expressed as % by weight of the thermoplastic composition:

| | |
|---|---|
| - elastomeric not crosslinked copolymer | 8% |
| - residue insoluble in xylene at 135°C after a 5-hour extraction | 36% |
| - polypropylene as such | 16% |
| - polypropylene contained in the insoluble residue | 7% (on the total) |
| - extender oil | 37%. |

The characteristics of the obtained product, determined on test pieces obtained from an injection press were as follows:

| | |
|---|---|
| SHORE hardness A | 60 |
| Tensile strength (MPa) | 7.0 |
| Elongation at break (%) | 370 |
| Compression set (10 h at 170°C) (%) | 57. |

The size of the dispersed elastomeric particles was lower than 10 »m, at less 50% of the particles having sizes lower than 5 »m.

### EXAMPLE 6

The preceding example was repeated, substituting the blend of propylene and ethylene/propylene copolymer prepared by mixing the components in a Banbury mixer by a product obtained directly according to the following procedure:

0.31 g of a catalyst based on MgCl₂ and TiCl₄, having a spheroidal shape and prepared according to example 1 of US-A-4,339, 054, and 259 g of Al(iso-Bu)₃ were introduced, at a temperature of 20°C, into a suitably equipped 20-liter autoclave containing 13 l of n-pentane.

The autoclave was brought to a temperature of 60°C and propylene, withdrawn from a cylinder thermoregulated at 40°C, was introduced, under stirring, up to a pressure of 3.5 atm. While temperature and pressure were maintained constant, propylene was fed until about 1450 g of polypropylene had formed. Then the autoclave was degassed to remove the solvent and the unreacted propylene, bringing the temperature in the autoclave again to 20°C. While maintaining the polymeric mass under stirring and operating at a temperature of 20°C, a C₂-C₃ mixture (40/60 by weight), withdrawn from cylinders thermoregulated at 40°C, was introduced into the autoclave until a pressure of 9.5 atm was reached. Monitoring the cylinder weight loss, about 3,850 g of polymer were produced in 4.5 h in gaseous phase. The autoclave was gradually degassed to remove the unreacted monomers and then was opened in order to discharge 5,300 g of polymer of spheroidal shape.

The polymer thus obtained had a propylene content of 60.5% by weight. The copolymeric component of said product was an ethylene/propylene copolymer having a propylene content of 47% and exhibiting the following characteristics:
- head-to-head, tail-to-tail inversions of propylene: substantially absent ( $\text{X₂ = X₄ = 0.018}$ );
- $\text{R₁ x R₂ = 7}$ ;
- $\text{Mw/Mn = 10}$ ;
- η = 3.8 dl/g.

Said synthesis product was converted into pellets by means of a head-cut, single-screw extruder, to facilitate the feeding to the APV extruder.

The test was conducted as described in example 5 as regards both the APV extruder and the addition of crosslinking agents, co-agents, polypropylene and oil.

The analysis gave the following results, expressed in % by weight of the thermoplastic composition:

| | |
|---|---|
| - not crosslinked elastomeric copolymer | 8% |
| - polypropylene as such | 15% |
| - residue insoluble in xylene at 135°C | 36% |
| - polypropylene content in the insoluble residue | 8% (on the total) |
| - extender oil | 38%. |

The characteristics of the product obtained, determined on test pieces produced by injection molding, were as follows:

| | |
|---|---|
| SHORE hardness A | 69 |
| Tensile strength (MPa) | 6.8 |
| Elongation at break (%) | 380 |
| Compression set (10 h at 170°C) (%) | 58. |

The dispersed elastomeric particle size was lower than 10 »m, with more than 50% of the particles having sizes lower than 5 »m.

### EXAMPLE 7

The procedure of example 5 was followed, employing the same amounts of components but using an ethylene/propylene copolymer containing 40% of propylene, prepared by means of a catalyst composed of VOCl₃ and Al-triisobutyl, following the procedure described in example 3, and having the following characteristics:
- $\text{R₁ x R₂ = 4}$ ;
- $\text{Mw/Mn = 5}$ ;
- head-to-head, tail-to-tail inversions of the propylene unit represented by X₂ = 0.13, X₄ = 0.06;
- η = 3.2 dl/g.

A composition was obtained, which, after crosslinking, was subjected to analysis and revealed the following composition:

| | |
|---|---|
| - not crosslinked elastomeric copolymer | 5% |
| - polypropylene as such | 19% |
| - residue insoluble in xylene at 135°C | 35% |
| - polypropylene content in the insoluble residue | 5.8% (on the total) |
| - extender oil | 39%. |

The characteristics of the resulting product, determined on test pieces produced by injection molding were as follows:

| | |
|---|---|
| SHORE hardness A | 68 |
| Tensile strength (MPa) | 6.7 |
| Elongation at break (%) | 410 |
| Compression set (10 h at 170°C) (%) | 71. |

The dispersed elastomeric particle size was not higher than 10 »m, with at least 50% of the particles having sizes lower than 5 »m.

### EXAMPLE 8

Example 5 was repeated, the only difference being that an ethylene/propylene/1,4-butadiene terpolymer prepared by means of a Ti-catalyst similar to the one described in example 1 of Italian patent application No. 21,510 A/87 in the name of the applicant hereof was utilized as an elastomeric component, using aluminium-triisobutyl as a co-catalyst. Said copolymer showed the following characteristics:

| | |
|---|---|
| - propylene | = 46% by weight |
| - 1,4-butadiene | = 1.5% by weight |
| - head-to-head, tail-to-tail inversions inversions represented by X₂ = 0.018 and by X₄ = 0.008 | |
| - Mw/Mn | = 9 |
| - η | = 3.7 dl/g. |

The analysis of the composition, carried out after crosslinking, gave the following results:

| | |
|---|---|
| - not crosslinked elastomeric copolymer | 6% |
| - polypropylene as such | 13% |
| - residue insoluble in xylene at 135°C after 5 hours | 40% |
| - polypropylene content in the insoluble residue | 10% |
| - extender oil | 38%. |

The characteristics of the product obtained, determined on test pieces prepared by an injection molding process, were as follows:

| | |
|---|---|
| SHORE hardness A | 70 |
| Tensile strength (MPa) | 7.2 |
| Elongation at break (%) | 350 |
| Compression set (10 h at 170°C) (%) | 55 |

The size of the elastomeric dispersed particles was lower than 10 »m, with at least 50% of said particles having sizes lower than 5 »m.

### EXAMPLE 9 (comparative)

Example 8 was repeated, but without using 1,5-difurfuryl-1,4-pentadiene-3-one as vulcanization coadjuvant. The analysis of the composition after crosslinking gave the following results, expressed in % by weight:

| | |
|---|---|
| - not crosslinked elastomeric terpolymer | 21% |
| - polypropylene as such | 22% |
| - residue insoluble in xylene at 135°C after 5 h | 14% |
| - polypropylene content in the insoluble residue | 1% (on the total) |
| - extender oil | 39%. |

The composition characteristics were as follows:

| | |
|---|---|
| - SHORE hardness A | 64 |
| - Tensile strength (MPa) | 3.1 |
| - Elongation at break (%) | 250 |
| - Compression set (10 h at 170°C) (%) | 95. |

### EXAMPLE 10 (comparative)

Example 1 was repeated, using, instead of di-furfural-aldazine, 0.4% by weight of triallyl cyanurate as crosslinking co-agent.

The resulting product exhibited the following %-composition:

| | |
|---|---|
| - not crosslinked elastomeric copolymer | 8% |
| - polypropylene as such | 29% |
| - residue insoluble in xylene at 135°C after 5 h | 21% |
| - polypropylene content in the insoluble residue | 2% (on the total of the composition) |
| - extender oil | 37%. |

The product characteristics were as follows:

| | |
|---|---|
| SHORE hardness A | 68 |
| Tensile strength (MPa) | 5.5 |
| Elongation at break (%) | 300 |
| Compression set (10 h at 170°C) (%) | 92. |

## Claims (Claims for the following Contracting State(s): BE, DE, FR, GB, IT, NL, SE)

1. Plastoelastomeric polyolefin composition, comprising a mixture of the following components:
A) 10 to 50% of not crosslinked polypropylene;
B) 2 to 10% of an elastomeric, not crosslinked ethylene/propylene copolymer and/or of an elastomeric, not crosslinked ethylene/propylene/diene terpolymer;
C) 30 to 45% of a polymeric product substantially insoluble in xylene at 135°C and comprising polypropylene and ethylene/propylene copolymer and/or ethylene/propylene/diene terpolymer;
D) 5 to 58% of extender oil;
the above percentages being by weight.

2. Composition according to claim 1, wherein the elastomeric copolymer and/or terpolymer is characterized by a substantial absence, in the macromolecular structure, of head-to-head, tail-to-tail inversions of the propylene unit.

3. Composition according to any one of claims 1 and 2, wherein the amount of component (A) ranges from 20 to 30% by weight.

4. Composition according to any one of claims 1 to 3, wherein the amount of component (B) ranges from 5 to 10% by weight.

5. Composition according to any one of claims 1 to 4, wherein the amount of component (C) ranges from 35 to 40% by weight.

6. Composition according to any one of claims 1 to 5, wherein the amount of polypropylene contained in the insoluble polymeric product (C) ranges from 5 to 20%, particularly from 10 to 15% by weight, based on the composition.

7. Process for preparing the plastoelastomeric polyolefin composition according to claim 1, comprising the following consecutive steps:
1) preparing an intimate mixture comprising, in % by weight:
(a) from 20 to 80% of propylene homopolymer or of a copolymer of propylene with up to 10% by weight of ethylene;
(b) from 80 to 20% of an elastomeric ethylene/propylene copolymer and/or of an elastomeric ethylene/propylene/diene terpolymer;
(c) from 0.1 to 10%, based on said elastomeric copolymer or terpolymer, of an organic peroxide as vulcanizing agent;
(d) from 5 to 60%, based on said organic peroxide, of at least one compound selected from furfurylidene acetone, the esters of furfurylidene malonic acid, the condensation products of β-(alpha-furyl)-acrolein with cyclic ketones and the compounds represented by one of the following general formulae: 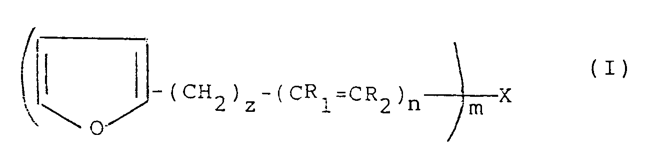 wherein R₁ and R₂, the same or different from each other, represent hydrogen or a C₁₋₃ alkyl group, X is a radical selected from -CHO, -COOH, -CONH₂, -CN, -NO₂, -COOCO-,-COOR, 〉CO, -CH₂COCH₂COOR,
-CH(COOR)₂, where R is an aryl group containing 6 to 8 carbon atoms or an alkyl group containing 1 to 4 carbon atoms,
z = 0 or 1
n = 1 or 2,
$\text{m = a number corresponding to the free valence of X}$ ; 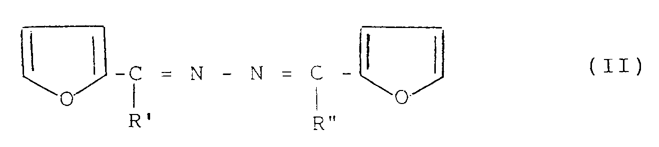 wherein R' and R'', the same or different from each other, may be hydrogen, alkyl radicals containing 1 to 4 carbon atoms, or cycloalkyl radicals;
(e) optionally, an amount lower than 4%, based on the total polymeric material, of polyethylene;
2) heating the mixture during mixing, mastication or while it is subjected to other shearing stresses to a temperature ranging from 160°C to 240°C, to melt the polypropylene and cross link 50 to 85% by weight of the elastomeric copolymer and/or terpolymer initially present;
3) adding to the resulting product, by means of intimate mixing, extender oil in an amount ranging from 6 to 100 parts by weight, based on said product.

8. Process according to claim 7, wherein the elastomeric copolymer and/or terpolymer has a molecular weight corresponding to η values of from 3 to 5 dl/g.

9. Process according to any one of claims 7 and 8, wherein the elastomeric copolymer and/or terpolymer is characterized by the substantial absence, in the macromolecular structure, of head-to-head, tail-to-tail inversions of the propylene unit.

10. Process according to any one of claims 7 to 9, wherein the elastomeric copolymer and/or terpolymer exhibits an average value of the product (R₁ x R₂) of higher than 2 and Mw/Mn values of at least 6.

## Claims (Claims for the following Contracting State(s): ES)

1. Plastoelastomeric polyolefin composition, comprising a mixture of the following components:
A) 10 to 50% of not crosslinked polypropylene;
B) 2 to 10% of an elastomeric, not crosslinked ethylene/propylene copolymer and/or of an elastomeric, not crosslinked ethylene/propylene/diene terpolymer;
C) 30 to 45% of a polymeric product substantially insoluble in xylene at 135°C and comprising polypropylene and ethylene/propylene copolymer and/or ethylene/propylene/diene terpolymer;
D) 5 to 58% of extender oil;
the above percentages being by weight.

2. Composition according to claim 1, wherein the elastomeric copolymer and/or terpolymer is characterized by a substantial absence, in the macromolecular structure, of head-to-head, tail-to-tail inversions of the propylene unit.

3. Composition according to any one of claims 1 and 2, wherein the amount of component (A) ranges from 20 to 30% by weight.

4. Composition according to any one of claims 1 to 3, wherein the amount of component (B) ranges from 5 to 10% by weight.

5. Composition according to any one of claims 1 to 4, wherein the amount of component (C) ranges from 35 to 40% by weight.

6. Composition according to any one of claims 1 to 5, wherein the amount of polypropylene contained in the insoluble polymeric product (C) ranges from 5 to 20%, particularly from 10 to 15% by weight, based on the composition.

7. Process for preparing a plastoelastomeric polyolefin composition, comprising a mixture of the following components:
A) 10 to 50% of not crosslinked polypropylene;
B) 2 to 10% of an elastomeric, not crosslinked ethylene/propylene copolymer and/or of an elastomeric, not crosslinked ethylene/propylene/diene terpolymer;
C) 30 to 45% of a polymeric product substantially insoluble in xylene at 135°C and comprising polypropylene and ethylene/propylene copolymer and/or ethylene/propylene/diene terpolymer;
D) 5 to 58% of extender oil;
the above percentages being by weight,
comprising the following consecutive steps:
1) preparing an intimate mixture comprising, in % by weight:
(a) from 20 to 80% of propylene homopolymer or of a copolymer of propylene with up to 10% by weight of ethylene;
(b) from 80 to 20% of an elastomeric ethylene/propylene copolymer and/or of an elastomeric ethylene/propylene/diene terpolymer;
(c) from 0.1 to 10%, based on said elastomeric copolymer or terpolymer, of an organic peroxide as vulcanizing agent;
(d) from 5 to 60%, based on said organic peroxide, of at least one compound selected from furfurylidene acetone, the esters of furfurylidene malonic acid, the condensation products of β-(alpha-furyl)-acrolein with cyclic ketones and the compounds represented by one of the following general formulae: 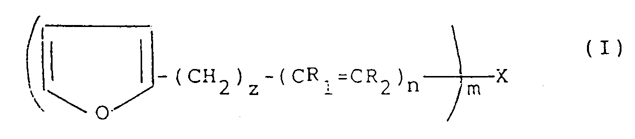 wherein R₁ and R₂, the same or different from each other, represent hydrogen or a C₁₋₃ alkyl group,
X is a radical selected from -CHO, -COOH, -CONH₂, -CN, -NO₂, -COOCO-, -COOR, 〉CO, -CH₂COCH₂COOR, -CH(COOR)₂, where R is an aryl group containing 6 to 8 carbon atoms or an alkyl group containing 1 to 4 carbon atoms,
z = 0 or 1
n = 1 or 2,
$\text{m = a number corresponding to the free valence of X}$ ; 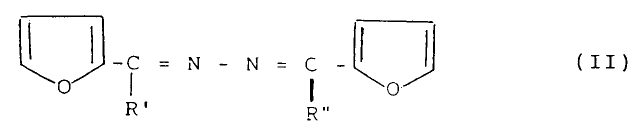 wherein R' and R'', the same or different from each other, may be hydrogen, alkyl radicals containing 1 to 4 carbon atoms, or cycloalkyl radicals;
(e) optionally, an amount lower than 4%, based on the total polymeric material, of polyethylene;
2) heating the mixture during mixing, mastication or while it is subjected to other shearing stresses to a temperature ranging from 160°C to 240°C, to melt the polypropylene and crosslink 50 to 85% by weight of the elastomeric copolymer and/or terpolymer initially present;
3) adding to the resulting product, by means of intimate mixing, extender oil in an amount ranging from 6 to 100 parts by weight, based on said product.

8. Process according to claim 7, wherein the elastomeric copolymer and/or terpolymer has a molecular weight corresponding to η values of from 3 to 5 dl/g.

9. Process according to any one of claims 7 and 8, wherein the elastomeric copolymer and/or terpolymer is characterized by the substantial absence, in the macromolecular structure, of head-to-head, tail-to-tail inversions of the propylene unit.

10. Process according to any one of claims 7 to 9, wherein the elastomeric copolymer and/or terpolymer exhibits an average value of the product (R₁ x R₂) of higher than 2 and Mw/Mn values of at least 6.

11. Process according to any one of claims 7 to 10, wherein the amount of component (A) ranges from 20 to 30% by weight.

12. Process according to any one of claims 7 to 11, wherein the amount of component (B) ranges from 5 to 10% by weight.

13. Process according to any one of claims 7 to 12, wherein the amount of component (C) ranges from 35 to 40% by weight.

14. Process according to any one of claims 7 to 13, wherein the amount of polypropylene contained in the insoluble polymeric product (C) ranges from 5 to 20%, particularly from 10 to 15% by weight, based on the composition.

## Patentansprüche (Patentansprüche für folgende(n) Vertragsstaat(en): BE, DE, FR, GB, IT, NL, SE)

1. Elastoplastische Polyolefin-Zusammensetzung, die eine Mischung der folgenden Komponenten umfaßt:
A) 10 bis 50% nicht vernetztes Polypropylen;
B) 2 bis 10% eines elastomeren, nicht vernetzten Ethylen/Propylen-Copolymers und/oder eines elastomeren, nicht vernetzten Ethylen/Propylen/Dien-Terpolymers;
C) 30 bis 45% eines polymeren Produkts, das in Xylol bei 135°C im wesentlichen unlöslich ist und das Polypropylen und Ethylen/Propylen-Copolymer und/oder Ethylen/Propylen/Dien-Terpolymer umfaßt;
D) 5 bis 58% eines Extenderöls;
wobei sich die obigen Prozentangaben auf das Gewicht beziehen.

2. Zusammensetzung nach Anspruch 1, worin das elastomere Copolymer und/oder Terpolymer dadurch gekennzeichnet ist, daß in der Makromolekularstruktur im wesentlichen keine Kopf-Kopf-, Schwanz-Schwanz-Inversionen der Propyleneinheit vorhanden sind.

3. Zusammensetzung nach einem der Ansprüche 1 und 2, worin die Menge der Komponente A) 20 bis 30 Gew.-% beträgt.

4. Zusammensetzung nach einem der Ansprüche 1 bis 3, worin die Menge der Komponente B) von 5 bis 10 Gew.-% beträgt.

5. Zusammensetzung nach einem der Ansprüche 1 bis 4, worin die Menge der Komponente C) von 35 bis 40 Gew.-% beträgt.

6. Zusammensetzung nach einem der Ansprüche 1 bis 5, worin die Menge an Polypropylen, die in dem unlöslichen polymeren Produkt C) enthalten ist, von 5 bis 20 Gew.-%, insbesondere von 10 bis 15 Gew.-%, bezogen auf die Zusammensetzung, beträgt.

7. Verfahren zur Herstellung der elastoplastischen Polyolefin-Zusammensetzung nach Anspruch 1, das die folgenden aufeinanderfolgenden Schritte umfaßt:
1) Herstellung einer innigen Mischung, die umfaßt (in Gew.-%):
(a) von 20 bis 80 % Propylen-Homopolymer oder ein Copolymer des Propylens mit bis zu 10 Gew.-% Ethylen;
(b) von 80 bis 20% eines elastomeren Ethylen/Propylen-Copolymers und/oder eines elastomeren Ethylen/Propylen/Dien-Terpolymers;
(c) von 0,1 bis 10%, bezogen auf das genannte elastomere Copolymer oder Terpolymer, eines organischen Peroxids als Vulkanisierungsmittel;
(d) von 5 bis 60%, bezogen auf das genannte organische Peroxid, wenigstens einer Verbindung, ausgewählt aus Furfurylidenaceton, den Estern von Furfurylidenmalonsäure, den Kondensationsprodukten von β-(α-Furyl)-acrolein mit zyklischen Ketonen und den Verbindungen, dargestellt durch eine der folgenden allgemeinen Formeln: 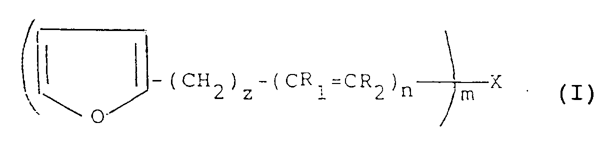 worin R₁ und R₂, die gleich oder verschieden sein können, Wasserstoff oder eine C₁₋₃-Alkylgruppe bedeuten,
X eine Gruppe bedeutet, die ausgewählt ist aus -CHO, -COOH, -CONH₂, -CN, -NO₂, -COOCO-, -COOR, 〉CO, -CH₂COCH₂COOR, -CH(COOR)₂, worin R eine Arylgruppe mit 6 bis 8 Kohlenstoffatomen oder eine Alkylgruppe mit 1 bis 4 Kohlenstoffatomen ist,
z = 0 oder 1 ist,
n = 1 oder 2 ist,
$\text{m = eine Zahl entspechend der freien Valenz von X bedeutet}$ ; 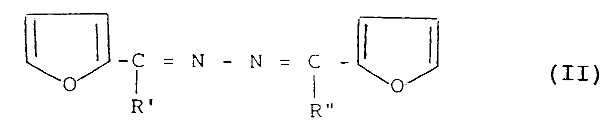 worin R' und R'', die gleich oder verschieden sein können, Wasserstoff, Alkylgruppen mit 1 bis 4 Kohlenstoffatomen oder Cycloalkylgruppen bedeuten;
(e) gegebenenfalls Polyethylen in einer Menge von weniger als 4%, bezogen auf das gesamte polymere Material;
2) Erhitzen der Mischung während des Mischens, der Mastikation oder während diese anderen Scherbeanspruchungen ausgesetzt wird, auf eine Temperatur im Bereich von 160° C bis 240° C, um das Polypropylen zu schmelzen und 50 bis 85 Gew.-% des elastomeren Copolymers und/oder Terpolymers, das ursprünglich anwesend war, zu vernetzen;
3. Zufügen zu dem erhaltenen Produkt durch inniges Mischen von Extenderöl in einer Menge von 6 bis 100 Gew.-Teilen, bezogen auf das genannte Produkt.

8. Verfahren nach Anspruch 7, worin das elastomere Copolymer und/oder Terpolymer ein Molekulargewicht hat, das η - Werten von 3 bis 5 dl/g entspricht.

9. Verfahren nach einem der Ansprüche 7 und 8, worin das elastomere Copolymer und/oder Terpolymer dadurch gekennzeichnet ist, daß in der makromolekularen Struktur im wesentlichen keine Kopf-Kopf-, Schwanz-Schwanz-Inversionen der Propyleneinheit anwesend sind.

10. Verfahren nach einem der Ansprüche 7 bis 9, worin das elastomere Copolymer und/oder Terpolymer einen Durchschnittswert des Produkts (R₁ x R₂) von mehr als 2 und Mw/Mn-Werte von wenigstens 6 aufweisen.

## Patentansprüche (Patentansprüche für folgende(n) Vertragsstaat(en): ES)

1. Elastoplastische Polyolefin-Zusammensetzung, die eine Mischung der folgenden Komponenten umfaßt:
A) 10 bis 50% nicht vernetztes Polypropylen;
B) 2 bis 10% eines elastomeren, nicht vernetzten Ethylen/Propylen-Copolymers und/oder eines elastomeren, nicht vernetzten Ethylen/Propylen/Dien-Terpolymers;
C) 30 bis 45% eines polymeren Produkts, das in Xylol bei 135° C im wesentlichen unlöslich ist und das Polypropylen und Ethylen/Propylen-Copolymer und/oder Ethylen/Propylen/Dien-Terpolymer umfaßt;
D) 5 bis 58% eines Extenderöls;
wobei sich die obigen Prozentangaben auf das Gewicht beziehen.

2. Zusammensetzung nach Anspruch 1, worin das elastomere Copolymer und/oder Terpolymer dadurch gekennzeichnet ist, daß in der Makromolekularstruktur im wesentlichen keine Kopf-Kopf-, Schwanz-Schwanz-Inversionen der Propyleneinheit vorhanden sind.

3. Zusammensetzung nach einem der Ansprüche 1 und 2, worin die Menge der Komponente A) 20 bis 30 Gew.-% beträgt.

4. Zusammensetzung nach einem der Ansprüche 1 bis 3, worin die Menge der Komponente B) von 5 bis 10 Gew.-% beträgt.

5. Zusammensetzung nach einem der Ansprüche 1 bis 4, worin die Menge der Komponente C) von 35 bis 40 Gew.-% beträgt.

6. Zusammensetzung nach einem der Ansprüche 1 bis 5, worin die Menge an Polypropylen, die in dem unlöslichen polymeren Produkt C) enthalten ist, von 5 bis 20 Gew.-%, insbesondere von 10 bis 15 Gew.-%, bezogen auf die Zusammensetzung, beträgt.

7. Verfahren zur Herstellung einer elastoplastischen Polyolefin-Zusammensetzung, die eine Mischung der folgenden Komponenten umfaßt:
A) 10 bis 50% nicht vernetztes Polypropylen;
B) 2 bis 10% eines elastomeren, nicht vernetzten Ethylen/Propylen-Copolymers und/oder eines elastomeren, nicht vernetzten Ethylen/Propylen/Dien-Terpolymers;
C) 30 bis 45 % eines polymeren Produkts, das in Xylol bei 135° C im wesentlichen unlöslich ist und das Polypropylen und Ethylen/Propylen-Copolymer und/oder Ethylen/Propylen/Dien-Terpolymer umfaßt;
D) 5 bis 58% eines Extenderöls;
wobei sich die obigen Prozentangaben auf das Gewicht beziehen,
und das die folgenden, aufeinanderfolgenden Schritte umfaßt:
1) Herstellung einer innigen Mischung, die umfaßt (in Gew.-%):
(a) von 20 bis 80 % Propylen-Homopolymer oder ein Copolymer des Propylens mit bis zu 10 Gew.-% Ethylen;
(b) von 80 bis 20% eines elastomeren Ethylen/Propylen-Copolymers und/oder eines elastomeren Ethylen/Propylen/Dien-Terpolymers;
(c) von 0,1 bis 10%, bezogen auf das genannte elastomere Copolymer oder Terpolymer, eines organischen Peroxids als Vulkanisierungsmittel;
(d) von 5 bis 60%, bezogen auf das genannte organische Peroxid, wenigstens einer Verbindung, ausgewählt aus Furfurylidenaceton, den Estern von Furfurylidenmalonsäure, den Kondensationsprodukten von β-(α-Furyl)-acrolein mit zyklischen Ketonen und den Verbindungen, dargestellt durch eine der folgenden allgemeinen Formeln: 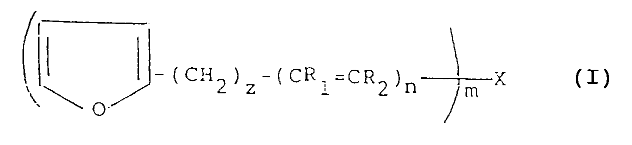 worin R₁ und R₂, die gleich oder verschieden sein können, Wasserstoff oder eine C₁₋₃-Alkylgruppe bedeuten,
X eine Gruppe bedeutet, die ausgewählt ist aus -CHO, -COOH, -CONH₂, -CN, -NO₂, -COOCO-, -COOR, 〉CO, -CH₂COCH₂COOR, -CH(COOR)₂, worin R eine Arylgruppe mit 6 bis 8 Kohlenstoffatomen oder eine Alkylgruppe mit 1 bis 4 Kohlenstoffatomen ist,
z = 0 oder 1 ist,
n = 1 oder 2 ist,
$\text{m = eine Zahl entspechend der freien Valenz von X bedeutet}$ ; 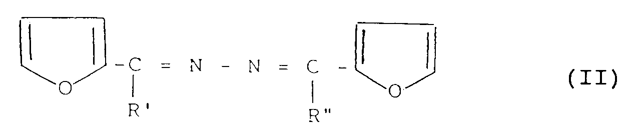 worin R' und R'', die gleich oder verschieden sein können, Wasserstoff, Alkylgruppen mit 1 bis 4 Kohlenstoffatomen oder Cycloalkylgruppen bedeuten;
(e) gegebenenfalls Polyethylen in einer Menge von weniger als 4%, bezogen auf das gesamte polymere Material;
2) Erhitzen der Mischung während des Mischens, der Mastikation oder während diese anderen Scherbeanspruchungen ausgesetzt wird, auf eine Temperatur im Bereich von 160° C bis 240° C, um das Polypropylen zu schmelzen und 50 bis 85 Gew.-% des elastomeren Copolymers und/oder Terpolymers, das ursprünglich anwesend war, zu vernetzen;
3) Zufügen zu dem erhaltenen Produkt durch inniges Mischen von Extenderöl in einer Menge von 6 bis 100 Gew.-Teilen, bezogen auf das genannte Produkt.

8. Verfahren nach Anspruch 7, worin das elastomere Copolymer und/oder Terpolymer ein Molekulargewicht hat, das η -Werten von 3 bis 5 dl/g entspricht.

9. Verfahren nach einem der Ansprüche 7 und 8, worin das elastomere Copolymer und/oder Terpolymer dadurch gekennzeichnet ist, daß in der makromolekularen Struktur im wesentlichen keine Kopf-Kopf-, Schwanz-Schwanz-Inversionen der Propyleneinheit anwesend sind.

10. Verfahren nach einem der Ansprüche 7 bis 9, worin das elastomere Copolymer und/oder Terpolymer einen Durchschnittswert des Produkts (R₁ x R₂) von mehr als 2 und Mw/Mn-Werte von wenigstens 6 aufweisen.

11. Verfahren nach einem der Ansprüche 7 bis 10, worin die Menge der Komponente A) von 20 bis 30 Gew.-% beträgt.

12. Vefahren nach einem der Ansprüche 7 bis 11, worin die Menge der Komponente B) von 5 bis 10 Gew.-% beträgt.

13. Verfahren nach einem der Ansprüche 7 bis 12, worin die Menge der Komponente C) von 35 bis 40 Gew.-% beträgt.

14. Verfahren nach einem der Ansprüche 7 bis 13, worin die Menge an Polypropylen, das in dem unlöslichen polymeren Produkt C) anwesend ist, von 5 bis 20 Gew.-%, insbesondere von 10 bis 15 Gew.-%, bezogen auf die Zusammensetzung, beträgt.

## Revendications (Revendications pour l'(les) Etat(s) contractant(s) suivant(s): BE, DE, FR, GB, IT, NL, SE)

1. Composition plastoélastomère de polyoléfines, comprenant un mélange des composants suivants:
(A) 10 à 50% en poids de polypropylène non réticulé;
(B) 2 à 10% en poids d'un copolymère éthylène/propylène élastomère non réticulé et/ou d'un terpolymère éthylène/propylène/diène élastomère non réticulé;
(C) 30 à 45% en poids d'un produit polymère pratiquement insoluble dans le xylène à une température de 135°C et comprenant du polypropylène et un copolymère éthylène/propylène et/ou un terpolymère éthylène/propylène/diène;
(D) 5 à 58% en poids d'une huile de dilution.

2. Composition suivant la revendication 1, dans laquelle le copolymère et/ou le terpolymère élastomères sont caractérisés par une absence pratique, dans la structure macromoléculaire, d'inversions tête-à-tête, queue-à-queue de l'unité propylène.

3. Composition suivant l'une quelconque des revendications 1 et 2, dans laquelle la quantité de composant (A) est comprise entre 20 et 30% en poids.

4. Composition suivant l'une quelconque des revendications 1 à 3, dans laquelle la quantité de composant (B) est comprise entre 5 et 10% en poids.

5. Composition suivant l'une quelconque des revendications 1 à 4, dans laquelle la quantité de composant (C) est comprise entre 35 et 40% en poids.

6. Composition suivant l'une quelconque des revendications 1 à 5, dans laquelle la quantité de polypropylène contenu dans le produit polymère insoluble (C) est comprise entre 5 et 20% en poids, en particulier entre 10 et 15% en poids par rapport au poids de la composition.

7. Procédé de préparation d'une composition plastoélastomère de polyoléfines selon la revendication 1, comprenant les étapes consécutives suivantes :
(1) préparation d'un mélange intime contenant en % en poids:
(a) de 20 à 80% d'un homopolymère de propylène et/ou d'un copolymère de propylène avec une quantité allant jusqu'à 10% en poids d'éthylène;
(b) de 80 à 20% d'un copolymère éthylène/propylène élastomère et/ou terpolymère éthylène/propylène/ diène élastomère;
(c) de 0,1 à 10% par rapport à ce copolymère ou terpolymère élastomère, d'un peroxyde organique en tant qu'agent vulcanisant;
(d) de 5 à 60% par rapport à ce peroxyde organique, d'au moins un composé choisi parmi la furfurylidène acétone, les esters d'acide furfurylidène malonique, les produits de condensation de 〈-(α-furyl)-acroléine avec des cétones cycliques et des dérivés de furane représentés par l'une des formules générales suivantes : 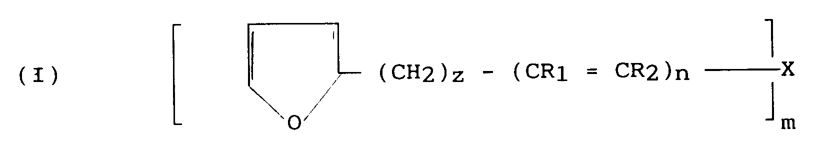 dans laquelle
R₁ et R₂, qui sont identiques ou différents, représentent un atome d'hydrogène ou un groupe alkyle en C₁₋₃ (par exemple, un groupe méthyle et éthyle),
X est un radical choisi parmi -CHO, -COOH, - CONH₂, -CN, -NO₂, -COOCO-, -COOR, >CO, -CH₂COCH₂COOR, -CH(COOR)₂, où R est un groupe aryle contenant 6 à 8 atomes de carbone ou un groupe alkyle contenant 1 à 4 atomes de carbone;
z est 0 ou 1,
n est 1 ou 2,
$\text{m est un nombre égal à la valence libre de X}$ ; 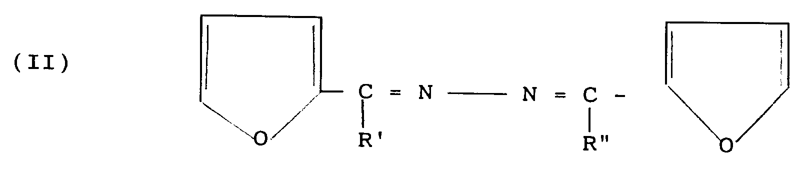 dans laquelle
R' et R'', qui sont identiques ou différents, peuvent être un atome d'hydrogène, des groupes alkyles contenant 1 à 4 atomes de carbone ou des groupes cycloalkyles;
(e) éventuellement une quantité inférieure à 4% de polyéthylène par rapport aux produits polymères totaux;
(2) chauffage du mélange pendant l'étape de mélange ou de mastication ou pendant l'étape dans laquelle ce mélange est soumis à d'autres contraintes de cisaillement, à une température comprise entre 160 et 240°C, pour faire fondre le polypropylène et réticuler environ 50 à 85% en poids du copolymère et/ou du terpolymère élastomères présents à l'origine;
(3) addition par mélange intime au produit résultant, d'une huile de dilution en une quantité comprise entre 6 et 100 parties en poids pour 100 parties de ce produit.

8. Procédé suivant la revendication 7, dans lequel le copolymère et/ou le terpolymère élastomères ont un poids moléculaire correspondant à des valeurs de η de 3 à 5 dl/g.

9. Procédé suivant l'une quelconque des revendications 7 et 8, dans lequel le copolymère et/ou le terpolymère élastomères sont caractérisés par une absence pratique, dans la structure macromoléculaire, d'inversions tête-à-tête, queue-à-queue de l'unité propylène.

10. Procédé suivant l'une quelconque des revendications 7 à 9, dans lequel le copolymère et/ou le terpolymère élastomères présentent une valeur moyenne du produit (R₁ x R₂) supérieure à 2 et des valeurs de PMp/PMn d'au moins 6.

## Revendications (Revendications pour l'(les) Etat(s) contractant(s) suivant(s): ES)

1. Composition plastoélastomère de polyoléfines, comprenant un mélange des composants suivants, les proportions étant exprimées en poids:
(A) 10 à 50% en poids de polypropylène non réticulé;
(B) 2 à 10% en poids d'un copolymère éthylène/propylène élastomère non réticulé et/ou d'un terpolymère éthylène/propylène/diène élastomère non réticulé;
(C) 30 à 45% en poids d'un produit polymère pratiquement insoluble dans le xylène à une température de 135°C et comprenant du polypropylène et un copolymère éthylène/propylène et/ou un terpolymère éthylène/propylène/diène;
(D) 5 à 58% en poids d'une huile de dilution.

2. Composition suivant la revendication 1, dans laquelle le copolymère et/ou le terpolymère élastomères sont caractérisés par une absence pratique, dans la structure macromoléculaire, d'inversions tête-à-tête, queue-à-queue de l'unité propylène.

3. Composition suivant l'une quelconque des revendications 1 et 2, dans laquelle la quantité de composant (A) est comprise entre 20 et 30% en poids.

4. Composition suivant l'une quelconque des revendications 1 à 3, dans laquelle la quantité de composant (B) est comprise entre 5 et 10% en poids.

5. Composition suivant l'une quelconque des revendications 1 à 4, dans laquelle la quantité de composant (C) est comprise entre 35 et 40% en poids.

6. Composition suivant l'une quelconque des revendications 1 à 5, dans laquelle la quantité de polypropylène contenu dans le produit polymère insoluble (C) est comprise entre 5 et 20% en poids, en particulier entre 10 et 15% en poids par rapport au poids de la composition.

7. Procédé de préparation d'une composition plastoélastomère de polyoléfines comprenant un mélange ayant la composition suivante, exprimée en poids:
A) 10 à 50% de polypropylène non réticulé,
B) 2 à 10% d'un copolymère éthylène/propylène non réticulé et/ou d'un terpolymère éthylène/propylène/diène élastomère non réticulé,
C) 30 à 45% d'un produit polymère pratiquement insoluble dans le xylène à une température de 135°C et comprenant du polypropylène et un copolymère éthylène/propylène et/ou un terpolymère éthylène/propylène/diène,
D) 5 à 58% d'une huile d'extension
comprenant les étapes consécutives suivantes :
(1) préparation d'un mélange intime contenant en % en poids:
(a) de 20 à 80% d'un homopolymère de propylène et/ou d'un copolymère de propylène avec une quantité allant jusqu'à 10% en poids d'éthylène;
(b) de 80 à 20% d'un copolymère éthylène/propylène élastomère et/ou terpolymère éthylène/propylène/diène élastomère;
(c) de 0,1 à 10% par rapport à ce copolymère ou terpolymère élastomère, d'un peroxyde organique en tant qu'agent vulcanisant;
(d) de 5 à 60% par rapport à ce peroxyde organique, d'au moins un composé choisi parmi la furfurylidène acétone, les esters d'acide furfurylidène malonique, les produits de condensation de 〈-(α-furyl)-acroléine avec des cétones cycliques et des dérivés de furane représentés par l'une des formules générales suivantes : 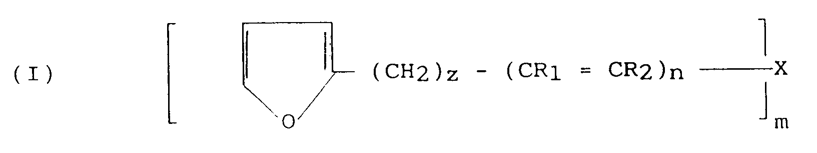 dans laquelle
R₁ et R₂, qui sont identiques ou différents, représentent un atome d'hydrogène ou un groupe alkyle en C₁₋₃ (par exemple, un groupe méthyle et éthyle),
X est un radical choisi parmi -CHO, -COOH, - CONH₂, -CN, -NO₂, -COOCO-, -COOR, >CO, -CH₂COCH₂COOR, -CH(COOR)₂, où R est un groupe aryle contenant 6 à 8 atomes de carbone ou un groupe alkyle contenant 1 à 4 atomes de carbone;
z est 0 ou 1,
n est 1 ou 2,
$\text{m est un nombre égal à la valence libre de X}$ ; 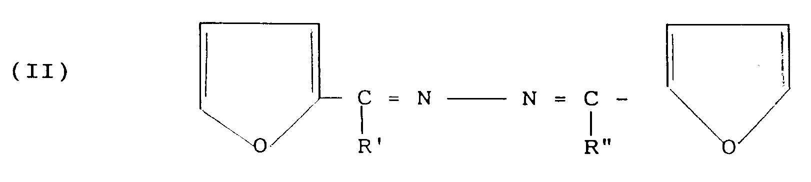 dans laquelle
R' et R'', qui sont identiques ou différents, peuvent être un atome d'hydrogène, des groupes alkyles contenant 1 à 4 atomes de carbone ou des groupes cycloalkyles;
(e) éventuellement une quantité inférieure à 4% de polyéthylène par rapport aux produits polymères totaux;
(2) chauffage du mélange pendant l'étape de mélange ou de mastication ou pendant l'étape dans laquelle ce mélange est soumis à d'autres contraintes de cisaillement, à une température comprise entre 160 et 240°C, pour faire fondre le polypropylène et réticuler environ 50 à 85% en poids du copolymère et/ou du terpolymère élastomères présents à l'origine;
(3) addition par mélange intime au produit résultant, d'une huile de dilution en une quantité comprise entre 6 et 100 parties en poids pour 100 parties de ce produit.

8. Procédé suivant la revendication 7, dans lequel le copolymère et/ou le terpolymère élastomères ont un poids moléculaire correspondant à des valeurs de η de 3 à 5 dl/g.

9. Procédé suivant l'une quelconque des revendications 7 et 8, dans lequel le copolymère et/ou le terpolymère élastomères sont caractérisés par une absence pratique, dans la structure macromoléculaire, d'inversions tête-à-tête, queue-à-queue de l'unité propylène.

10. Procédé suivant l'une quelconque des revendications 7 à 9, dans lequel le copolymère et/ou le terpolymère élastomères présentent une valeur moyenne du produit (R₁ x R₂) supérieure à 2 et des valeurs de PMp/PMn d'au moins 6.

11. Procédé selon l'une quelconque des revendications 7 à 10, caractérisé en ce que la teneur en composant (A) est comprise entre 20 et 30% en poids.

12. Procédé selon l'une quelconque des revendications 7 à 11, caractérisé en ce que la teneur en composant (B) est comprise entre 5 et 10% en poids.

13. Procédé selon l'une quelconque des revendications 7 à 11, caractérisé en ce que la teneur en composant (C) est comprise entre 35 et 40% en poids.

14. Procédé selon l'une quelconque des revendications 7 à 13, caractérisé en ce que la proportion de polypropylène est comprise entre 5 et 20%, notamment 10 et 15%, exprimés par rapport à la composition.
